# EUROPÄISCHE PATENTSCHRIFT

(11) **EP 0 710 594 B1**
(45) Veröffentlichungstag und Bekanntmachung des Hinweises auf die Patenterteilung: **10.03.1999**
(21) Anmeldenummer: 95116327.8
(22) Anmeldetag: 17.10.1995
(51) Int. Cl.: B60T 1/087

(54) **Wärmetauscher, insbesondere für einen hydrodynamischen Retarder**
Heat exchanger, particularly for a hydrodynamic retarder
Echangeur thermique, en particulier pour un ralentisseur hydrodynamique

(30) Priorität: 04.11.1994 DE 4439368
(43) Veröffentlichungstag der Anmeldung: 08.05.1996
(73) Patentinhaber: VOITH TURBO GMBH & CO. KG, D-74564 Crailsheim (DE)
(72) Erfinder: Vogelsang, Klaus, D-74564 Crailsheim (DE)
(74) Vertreter: Weitzel, Wolfgang, Dr.-Ing. Patentanwalt

(56) Entgegenhaltungen:
- DE-C- 4 310 898

## Beschreibung

Die Erfindung betrifft einen Wärmetauscher, insbesondere für einen hydrodynamischen Retarder. Auf den Oberbegriff von Anspruch 1 wird verwiesen.

Ein solcher Wärmetauscher ist beispielsweise aus DE 43 10 898 C1 bekanntgeworden.

Die moderne Fahrzeugtechnik verwendet in zunehmendem Maße auf Schiene und Straße hydrodynamische Retarder. Diese sind besonders bei Nutzfahrzeugen im Zuge der gestiegenen Sicherheitsanforderungen ein entscheidendes Element eines reibungslosen Straßenverkehrs.

Retarder erzeugen beim Bremsen ganz erhebliche Wärmemengen, die rasch abgeführt werden müssen, damit die Arbeitsflüssigkeit eine bestimmte Höchsttemperatur nicht übersteigt, und damit der Retarder auch nach längeren Bremsphasen betriebsfähig bleibt. Zu diesem Zweck werden die Arbeitsflüssigkeit oder ein Teil hiervon aus dem Arbeitsraum des Retarders entnommen, durch einen äußeren Kühlkreislauf mit einem Wärmetauscher hindurchgeschickt und sodann wieder dem Arbeitsraum eingespeist. Trotz des Kühlens der Arbeitsflüssigkeit im Wärmetauscher erreicht der Retarder während des Bremsbetriebes eine Temperatur, die immer noch deutlich über jener der bremsfreien Phasen liegt. Er strahlt dabei einen Teil der Wärme an seine Umgebung ab, die sich ebenfalls entsprechend aufheizt.

Nicht nur der Retarder ist entsprechend den maximalen Bremsanforderungen auszulegen, sondern auch bei der Auslegung des äußeren Kühlkreislaufes mit Wärmetauscher müssen die maximal anfallenden Wärmemengen zugrundegelegt werden.

Die Dauerhaltbarkeit der Retarder sowie der zugehörenden Wärmetauscher ist häufig unbefriedigend. Es kommt immer wieder zu Schäden, und zwar sowohl beim Retarder als auch im Kühlflüssigkeitskreislauf. Besonders gefürchtet sind Kavitationsschäden im Wärmetauscherblock. Diese führen zu Undichtheit zwischen Arbeitsflüssigkeit und Kühlflüssigkeit. Derartige Schäden wurden besonders häufig dann beobachtet, wenn bei einem Nutzfahrzeug der Motor bei niedrigen Drehzahlen umläuft, so daß die Kühlanlage ein reduziertes Leistungsniveau hat.

Als Abhilfe kommt in Betracht, die genannten Anlagen mit ihren einzelnen Bauteilen, also Retarder und Kühlanlage, stärker zu dimensionieren. Dem sind jedoch Grenzen gesetzt, weil nämlich eine Vergrößerung der Kapazität eines Retarders mit zugehörender Kühlanlage eine Gewichtsvergrößerung darstellt, die vom Kunden nicht akzeptiert wird. Außerdem werden hierdurch natürlich die Herstellungskosten vergrößert.

Außerdem könnte man daran denken, besondere Werkstoffe einzusetzen, wie beispielsweise Keramik. Dies steigert jedoch wieder die Herstellungskosten.

Der Erfindung liegt die Aufgabe zugrunde, einen Wärmetauscher, insbesondere für einen hydrodynamischen Retarder, derart zu gestalten, daß dessen Lebensdauer gesteigert wird, und daß insbesondere die genannten Schäden vermieden werden. Diese Aufgabe wird durch die kennzeichnenden Merkmale von Anspruch 1 gelöst.

Der Erfinder hat zunächst folgendes erkannt: Bei den sogenannten Anpassungs-Bremsungen bremst der Fahrer während einer relativ kleinen Zeitspanne relativ heftig. Dies führt zu einem extrem hohen Wärmeanfall im Retarder und somit zu einem hohen Energiestoß auf das Kühlsystem. Dessen Einzelelemente - Schläuche, Gehäuseteile, Lager, Wärmetauscher, Temperatursensor, Wasserpumpe - unterliegen daher einer Art Temperaturschock. Dieser kann Einzelteile erheblich beschädigen.

Hieraus hat der Erfinder sodann den weiteren Gedanken gemäß der Erfindung abgeleitet, nämlich dem Wärmetauscherblock einen Energiespeicher zuzuordnen. Damit ist es möglich, einen thermisch kritischen Energiestoß zunächst aufzunehmen und über einen verhältnismäßig langen Zeitraum an das Kühlmedium abzugeben. Man könnte somit sagen, daß der Energiestoß "thermisch gedämpft wird". Der Kapazitätsenergiespeicher hat somit die Funktion eines Energiedammes, der den Hauptenergieschock zunächst absorbiert und die Energie in gedämpfter Form und über eine gestreckte Zeitspanne weitergibt an die Kühlflüssigkeit. Damit werden die gefürchteten Schäden der Einzelelemente des Kühlsystemes vermieden.

Gleichzeitig wird es hierbei überflüssig, die Kapazität der gesamten Anlage zu vergrößern. Damit werden Kosten und Gewicht eingespart. Außerdem ist es nicht notwendig, teure Materialien einzusetzen, die hohen Energiebelastungen standhalten.

Der genannte kapazitive Energiespeicher kann aus allen möglichen Werkstoffen bestehen, und zwar nicht nur festen, sondern auch flüssigen Körpern und latent speichernden Medien. Wesentlich ist hierbei, daß das Energiespeichermedium dazu in der Lage ist, Energie in Wärmeform rasch und in relativ großen Mengen aufzunehmen.

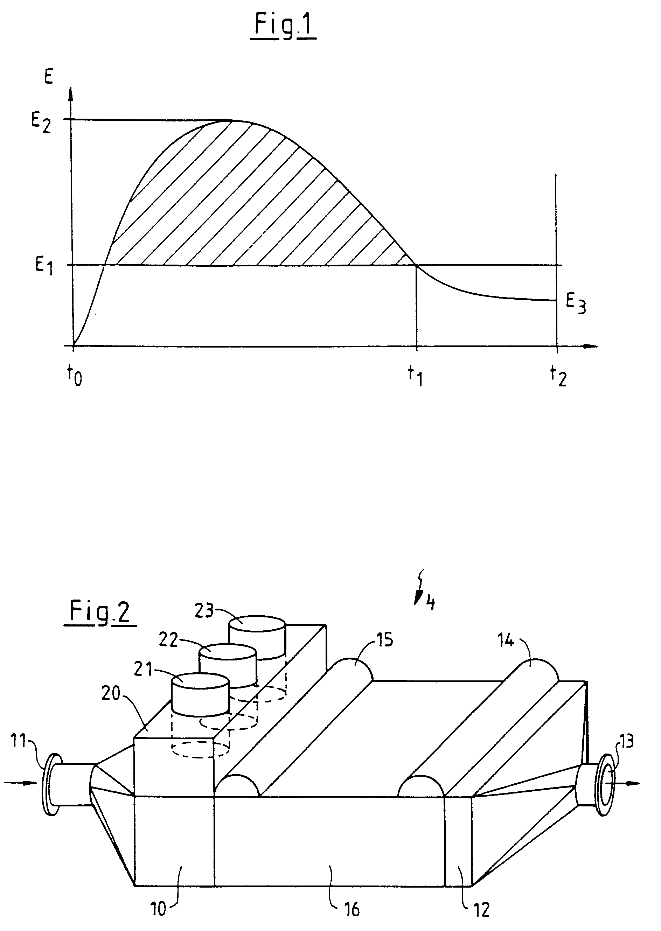

Bei der eingangs genannten Druckschrift ist zwar in Figur 1 ebenfalls ein Speicher 3 dargestellt. Dieser stellt jedoch lediglich einen Vorratsbehälter dar, der die Aufgabe nicht zu lösen vermag, und der auch nicht die Vorteile der Erfindung bringt. Wesentlich ist, daß das Speichermedium dem Wärmetauscherblock unmittelbar zugeordnet wird, so daß es die vom Arbeitsmittel herangeführte Wärme dementsprechend auch unmittelbar aufnehmen kann.

Die Erfindung ist anhand der Zeichnung näher erläutert. Darin ist im einzelnen folgendes dargestellt:

Das in Figur 1 gezeigte Diagramm veranschaulicht die bei einer Bremsung über einer gewissen Zeitspanne anfallende Energiemenge. Die Bremsung beginnt zum Zeitpunkt t₀. Von da ab steigt die anfallende Energiemenge zunächst bis auf den Wert E₁. Dieser Wert ist deshalb zulässig, weil er vom vorhandenen Kühlsystem ohne weiteres verkraftet werden kann. Der Retarder erzeugt jedoch bei einer Anpassungsbremsung noch weitere Energie, so daß die anfallende Energiemenge bis auf den Wert E₂ ansteigt. Nach Erreichen eines Maximums geht sie sodann wieder zurück auf den Wert E₁. Diesen Wert erreicht sie zum Zeitpunkt t₁. Im weiteren Verlauf fällt sie auf den Wert E₃ ab. Diesen erreicht sie zum Zeitpunkt t₂.

Die schraffiert dargestellte Energiemenge stellt die kritische Stoßenergiemenge dar. Diese wäre dann schädlich, wenn sie auf die einzelnen Elemente des Kühlsystems ungepuffert auftreffen würde.

Aus Figur 2 erkennt man im einzelnen den Aufbau eines Wärmetauschers 4. Er umfaßt die folgenden wesentlichen Elemente: einen Sammelkasten 10 für den Wassereintritt mit einem Einlaßstutzen 11, einen Sammelkasten 12 für den Wasseraustritt mit einem Auslaßstutzen 13, einen Sammelkasten 14 für den Öleintritt, einen Sammelkasten 15 für den Ölaustritt, einen Öl-Wasser-Wärmetauscherblock 16 als Kernstück des Wärmetauschers. Es versteht sich, daß dieser Block 16 in seinem Inneren in üblicher Weise aufgebaut ist,indem er beispielsweise plattenartige Kanäle zum Führen des einen der beiden Medien Öl oder Wasser enthält.

Der Wärmetauscher weist eine warme Seite auf, die sich in der Darstellung rechts befindet, wo das heiße Öl eintritt und das aufgewärmte Kühlwasser austritt, ferner eine kalte Seite, in der Zeichnung links dargestellt, wo das kalte Wasser eintritt und das gekühlte Öl austritt. An dieser kalten Seite ist gemäß der Erfindung ein Gehäuse 20 vorgesehen. Dieses ist im vorliegenden Falle auf den Sammelkasten 10 für den Wassereintritt aufgesetzt und somit baulich mit diesem vereinigt. Durch entsprechende Materialwahl findet ein Wärmeaustausch zwischen dem Sammelkasten 10 und dem Gehäuse 20 statt, so daß diese beiden Bauteile annähernd ein und dieselbe Temperatur haben. Das Gehäuse 20 weist drei Kapseln 21, 22, 23 zur Aufnahme von elektrischen, elektronischen oder mechanischen Elementen auf, die steuerungs- oder regelungstechnische Aufgaben erfüllen, und die wärmeempfindlich sind. Die genannten wärmeempfindlichen Elemente können entweder in unmittelbarem Zusammenhang mit der Retarderanlage stehen, oder andere Funktionen ausüben, z.B. für eine ABS-Anlage.

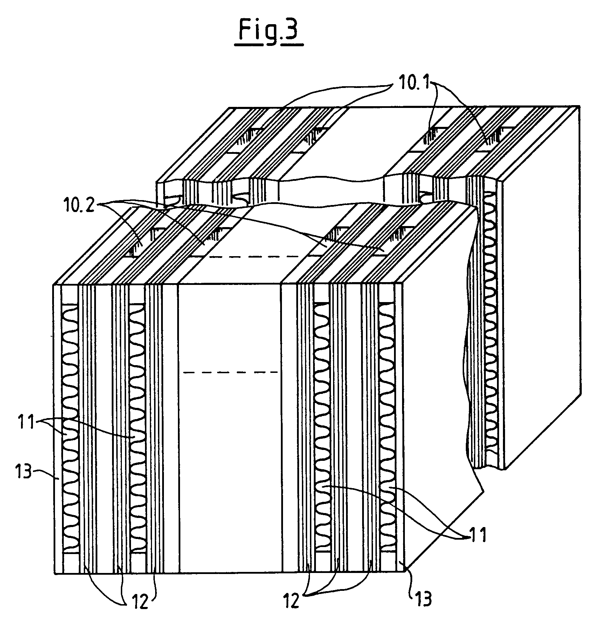

Figur 3 zeigt einen Wärmetauscherblock, der als Plattenspeicher aufgebaut ist, und der kapazitive Energiespeicher ebenfalls in Plattenform aufweist. Der Wärmetauscherblock ist wie folgt aufgebaut, von links nach rechts gesehen - er ist zunächst von einem relativ dicken Randblech 13 begrenzt. Hierauf folgt ein wasserdurchströmter Raum 11, begrenzt von einem wellenförmigen Turbulator. Das Wasser dient in diesem Fall als Kühlmittel. Hierauf folgt ein erster, kapazitiver Energiespeicher 12 in Gestalt einer plattenförmigen Speicherkammer. Dieser besteht im vorliegenden Falle aus Aluminium. Andere Stoffe sind denkbar, insbesondere solche, die eine hohe Wärmeaufnahmekapazität haben. Es kommen auch Flüssigkeiten oder Gase in Betracht. Es schließt sich in Richtung nach rechts gesehen ein ölerfüllter Raum (10.1, 10.2) an. Hierbei ist Öl das Arbeitsmittel eines Retarders. Sodann folgt ein zweiter kapazitiver Energiespeicher 12 in Gestalt einer plattenförmigen Speicherkammer. Hieran schließt sich wiederum ein wassererfüllter Raum 11 an, gefolgt von einem ölerfüllten Raum (10.1, 10.2) usw.

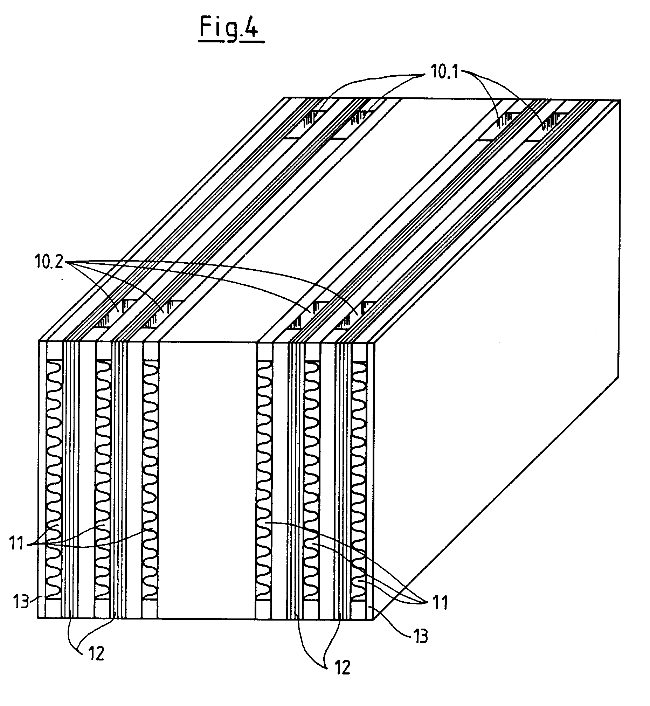

Die Ausführungsform gemäß Figur 4 ist im Grunde ähnlich aufgebaut wie jene gemäß Figur 3. Jedoch ist hierbei die Reihenfolge der verschiedenen Platten, von links nach rechts vorrückend, wie folgt: Wasser - Energiespeicher - Öl - Wasser - Energiespeicher - Öl - Wasser, usw. Zwischen Öl und Wasser befindet sich jeweils ein relativ dünnes Trennblech. An den Außenwänden befindet sich ein relativ dickes Randblech.

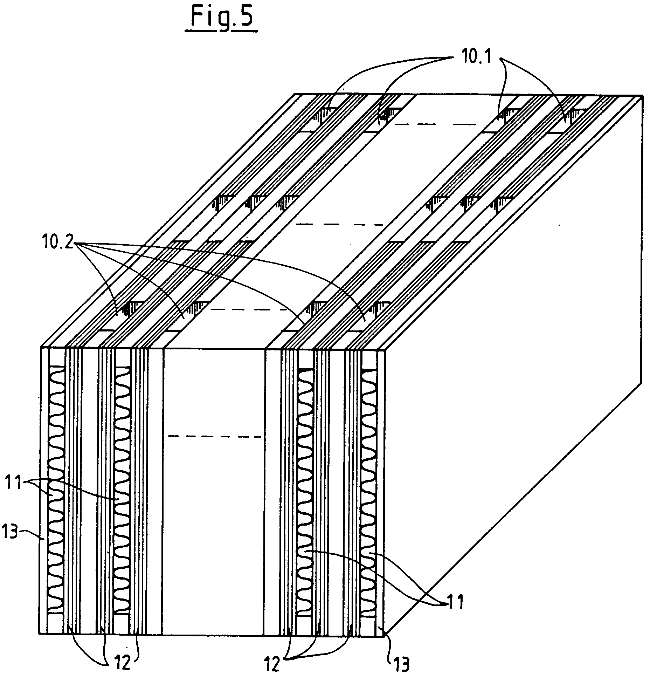

Bei dem Wärmetauscherblock gemäß Figur 5 ist die Reihenfolge wie folgt, von links nach rechts gesehen: dickes Blech - wasserführende Platte - Kammer für thermisches Speichermedium - ölführende Platte - Kammer für thermisches Speichermedium - wasserführende Platte - Kammer für thermisches Speichermedium - usw.

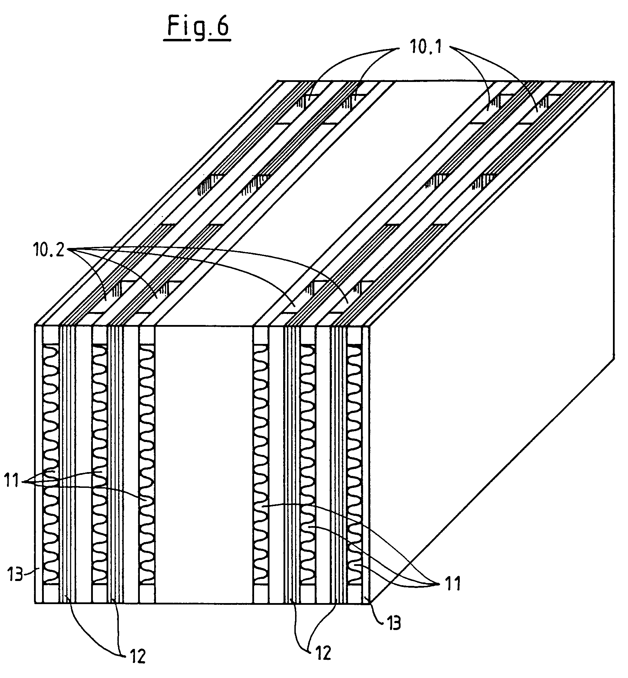

Bei der Ausführungsform gemäß Figur 6 ist die Reihenfolge wie folgt, von links nach rechts gesehen: dickes Blech - wasserführende Platte - Kammer für thermisches Speichermedium - ölführende Platte - wasserführende Platte - Kammer für thermisches Speichermedium - ölführende Platte - wasserführende Platte - usw.

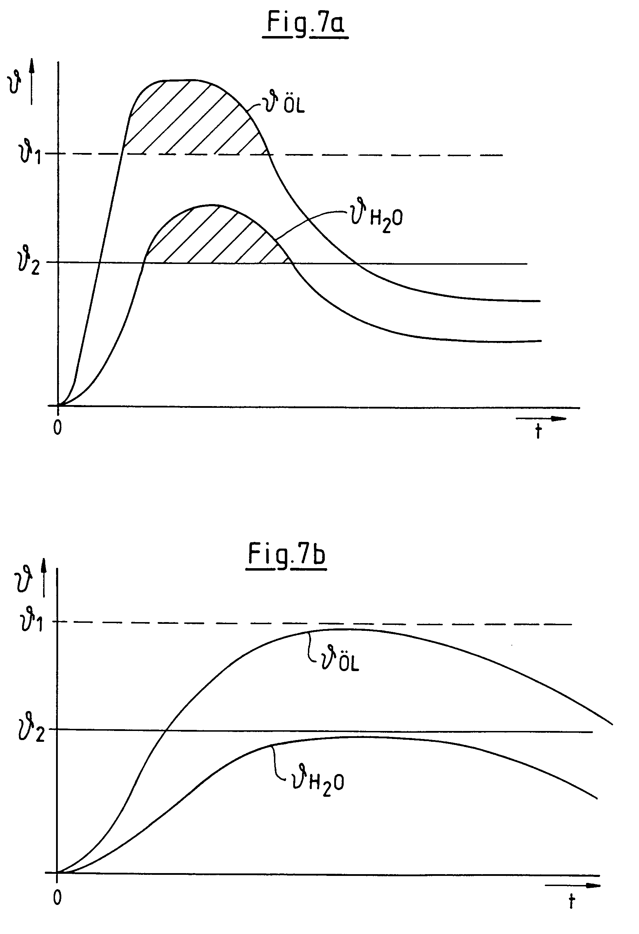

Die beiden Diagramme in den Figuren 7a und 7b veranschaulichen die technischen Auswirkungen der Erfindung. Sie stellen jeweils die Temperaturverläufe des Arbeitsmittels Öl und des Kühlmittels Wasser im Zusammenhang mit einem Bremsvorgang dar. Dabei zeigt Figur 7a die Verhältnisse ohne Anwendung der Erfindung und Figur 7b die Verhältnisse mit Anwendung der Erfindung. In beiden Fällen beginnt eine Bremsung beim Nullpunkt der t-Achse. In beiden Diagrammen erkennt man jeweils einen Grenzwert ϑ₁ für Öl und ϑ₂ für Wasser. Damit sind diejenigen Grenzwerte gemeint, welche noch zulässige Temperaturen darstellen.

Wie man sieht, weist Figur 7a einen Temperaturverlauf auf, der sowohl für das Arbeitsmittel Öl als auch für das Kühlmittel Wasser den zulässigen Grenzwert ϑ₁ bzw. ϑ₂ überschreitet. Die schraffierten Flächen stellen Bereiche einer unzulässig hohen Temperatur dar.

Der Temperaturverlauf der beiden Medien ist in Figur 7b - bei Anwendung der Erfindung - sanft, so daß die Grenzwerte ϑ₁ und ϑ₂ zu keinem Zeitpunkt überschritten werden.

Durch die unmittelbare Integration des Energiespeichers wird die Abfuhr überschüssiger Energie problemlos ermöglicht ohne Überdimensionierung der gesamten Anlage, sowie ohne eine zusätzliche Pumpe. Bei zweckmäßiger Bemessung der Speicherkapazität und bei richtiger Auswahl des Speichermediums ist eine Energie-Zwischenspeicherung zur sicheren Begrenzung der maximalen Temperaturen des Arbeitsmittels wie auch des Kühlmittels gewährleistet.

## Patentansprüche

1. Wärmetauscher (4), insbesondere für einen hydrodynamischen Retarder
1.1 mit einem Wärmetauscherblock (16);
1.2 mit Kanälen für das zu kühlende Medium oder Arbeitsmedium;
1.3 mit Kanälen für das kühlende Medium oder Kühlmedium;
gekennzeichnet durch die folgenden Merkmale:
1.4 der Wärmetauscherblock (16) weist Energiespeicher mit einem Speichermedium (12) zum Speichern von Wärmeenergie auf.

2. Wärmetauscher nach Anspruch 1, dadurch gekennzeichnet, daß das Speichermedium (12) ein fester Körper ist.

3. Wärmetauscher nach Anspruch 1, dadurch gekennzeichnet, daß das Speichermedium (12) eine Flüssigkeit ist.

4. Wärmetauscher nach einem der Ansprüche 1 bis 3, dadurch gekennzeichnet, daß zur latenten Aufnahme von Wärmeenergie Speichermedien (12) zwischen Kanälen (10.1, 10.2) des Arbeitsmediums und Kanälen (11) des Kühlmediums angeordnet sind.

5. Wärmetauscher nach Anspruch 4, dadurch gekennzeichnet, daß der Wärmetauscher (4) ein Plattenwärmetauscher ist, und daß die einzelnen Speichermedien (12) ebenfalls plattenförmig bzw. kammerförmig sind.

6. Wärmetauscher nach Anspruch 5, dadurch gekennzeichnet, daß jeweils eine Speicherplatte bzw. Speicherkammer zwischen einer arbeitsmedium-führenden Platte und einer kühlmedium-führenden Platte angeordnet ist.

## Claims

1. Heat exchanger (4), particularly for a hydrodynamic retarder
1.1 with a heat exchanger block (16);
1.2 with channels for the medium to be cooled or working medium;
1.3 with channels for the cooling medium or coolant;
characterised by the following features:
1.4 the heat exchanger block (16) comprises energy stores with a storage medium (12) for storing heat energy.

2. Heat exchanger according to claim 1, characterised in that the storage medium (12) is a solid body.

3. Heat exchanger according to claim 1, characterised in that the storage medium (12) is a liquid.

4. Heat exchanger according to one of claims 1 to 3, characterised in that for the latent storage of heat energy storage media (12) are arranged between channels (10.1, 10.2) of the working medium and channels (11) of the cooling medium.

5. Heat exchanger according to claim 4, characterised in that the heat exchanger (4) is a plate heat exchanger and in that the individual storage media (12) are also plate-shaped or chamber shaped.

6. Heat exchanger according to claim 5, characterised in that respectively a storage plate or storage chamber is arranged between a working medium guiding plate and a cooling medium guiding plate.

## Revendications

1. Echangeur de chaleur (4), en particulier pour un ralentisseur hydrodynamique
1.1 avec un bloc échangeur de chaleur (16)
1.2 avec des canaux pour l'agent à refroidir ou l'agent de travail
1.3 avec des canaux pour l'agent à refroidir ou l'agent réfrigérant
caractérisé par les caractéristiques suivantes:
1.4 Le bloc échangeur de chaleur (16) présente des accumulateurs d'énergie avec un agent accumulateur (12) pour l'accumulation de l'énergie thermique.

2. Echangeur de chaleur selon la revendication 1, caractérisé en ce que l'agent accumulateur (12) est un corps solide.

3. Echangeur de chaleur selon la revendication 1, caractérisé en ce que l'agent accumulateur (12) est un liquide.

4. Echangeur de chaleur selon l'une des revendications 1 à 3, caractérisé en ce que des agents accumulateurs (12) sont disposés entre les canaux (10.1, 10.2) de l'agent de travail et les canaux (11) de l'agent réfrigérant pour l'absorption latente d'énergie thermique.

5. Echangeur de chaleur selon la revendication 4, caractérisé en ce que l'échangeur de chaleur (4) est un échangeur de chaleur à plaques et que les différents agents accumulateurs (12) sont également en forme de plaques ou de chambres.

6. Echangeur de chaleur selon la revendication 5, caractérisé en ce que respectivement une plaque accumulatrice ou chambre d'accumulation est disposée entre une plaque conduisant l'agent de travail et une plaque conduisant l'agent réfrigérant.
